## Europäisches Patentamt

## European Patent Office

## Office européen des brevets

(19)

(11) Veröffentlichungsnummer: **0 170 655 B1**

(12) **EUROPÄISCHE PATENTSCHRIFT**

(45) Veröffentlichungstag der Patentschrift:
**15.07.87**

(21) Anmeldenummer: **84901574.8**

(22) Anmeldetag: **05.04.84**

(86) Internationale Anmeldenummer:
**PCT/DE 84/00079**

(87) Internationale Veröffentlichungsnummer:
**WO 84/04177 (25.10.84 Gazette 84/25)**

(51) Int. Cl.⁴: **G 02 B 23/10,** G 01 C 21/04, G 02 B 7/18

(54) **EINRICHTUNG ZUM EINSPIEGELN VON ZUSATZINFORMATIONEN IN EIN FERGLAS.**

(30) Priorität: 08.04.83 DE 8310763 U
09.05.83 DE 8314105 U

(43) Veröffentlichungstag der Anmeldung:
**12.02.86 Patentblatt 86/7**

(45) Bekanntmachung des Hinweises auf die Patenterteilung:
**15.07.87 Patentblatt 87/29**

(84) Benannte Vertragsstaaten:
**AT BE CH DE FR GB LI LU NL SE**

(56) Entgegenhaltungen:
CH - A - 464 562
DE - A - 1 952 960
DE - A - 2 063 527
DE - A - 2 501 178
FR - A - 2 319 914
GB - A - 24 814
GB - A - 406 336

(73) Patentinhaber: **STEINER, Carl,**
**Dr.-Hans-Frisch-Strasse 9, D-8580 Bayreuth (DE)**

(72) Erfinder: **STEINER, Carl, Dr.-Hans-Frisch-Strasse 9,**
**D-8580 Bayreuth (DE)**

(74) Vertreter: **Voigt, Günter, Dipl.-Ing., Patentanwälte**
**Dr.-Ing. Alfred Schulze, Dipl.-Ing. Günter Voigt & Partner**
**Nordring 152, Postfach 210104, D-8500 Nürnberg 21 (DE)**

# Beschreibung

Die Erfindung bezieht sich auf eine Einrichtung zur wahlweisen Beobachtung einer Zusatzinformation und eines Objekts mit einem binokularen Fernglas gemäss Oberbegriff des Anspruchs 1.

Aus der GB-PS 406 336 ist eine Einrichtung zum Einspiegeln von Zusatzinformationen in den Strahlengang eines Fernglases bekannt. Die bekannte Einrichtung weist einen Prismensatz auf, welcher die der Zusatzinformation zugeordneten Abbildungsstrahlen umlenkt und in den Strahlengang des Fernglases einspiegelt. Darüber hinaus ist bei der bekannten Einrichtung eine Beleuchtungsanordnung für den Informationsträger vorhanden.

Aus der FR-PS 2 319 914 ist ferner eine Einrichtung bekannt, bei der im Okulargesichtsfeld eines Fernglases Zusatzinformationen in Form von Bildern eines gleichzeitig zu beobachtenden Objekts dargeboten werden.

Aus dem deutschen Gebrauchsmuster 7 970 058 ist darüber hinaus ein Fernglas mit auf seiner Oberseite angebautem Kompass bekannt, der anstelle der üblichen Kompassnadel eine Skalenscheibe in Form einer Windrose drehbar enthält, wobei die Skalenscheibe mindestens im äusseren Bereich der Skala aus durchsichtigem oder durchscheinendem Material besteht. Das Bild dieser Skalenscheibe wird mit Hilfe einer speziellen Optik in den Strahlengang des Fernglases eingespiegelt. Damit erhält der Benutzer des Fernglases gleichzeitig eine Information über die von ihm jeweils angepeilte Richtung. In vielen Fällen besteht jedoch darüber hinaus der Wunsch, bestimmte zugehörige Kartenausschnitte in jeweils richtiger Position einzublenden.

Der Erfindung liegt daher die Aufgabe zugrunde, eine Vorrichtung zur Einspiegelung von positionsgerechten Kartenausschnitten zu schaffen.

Die Lösung dieser Aufgabe erfolgt erfindungsgemäss mit Hilfe der im kennzeichnenden Teil des Anspruchs 1 angegebenen Merkmale.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen:

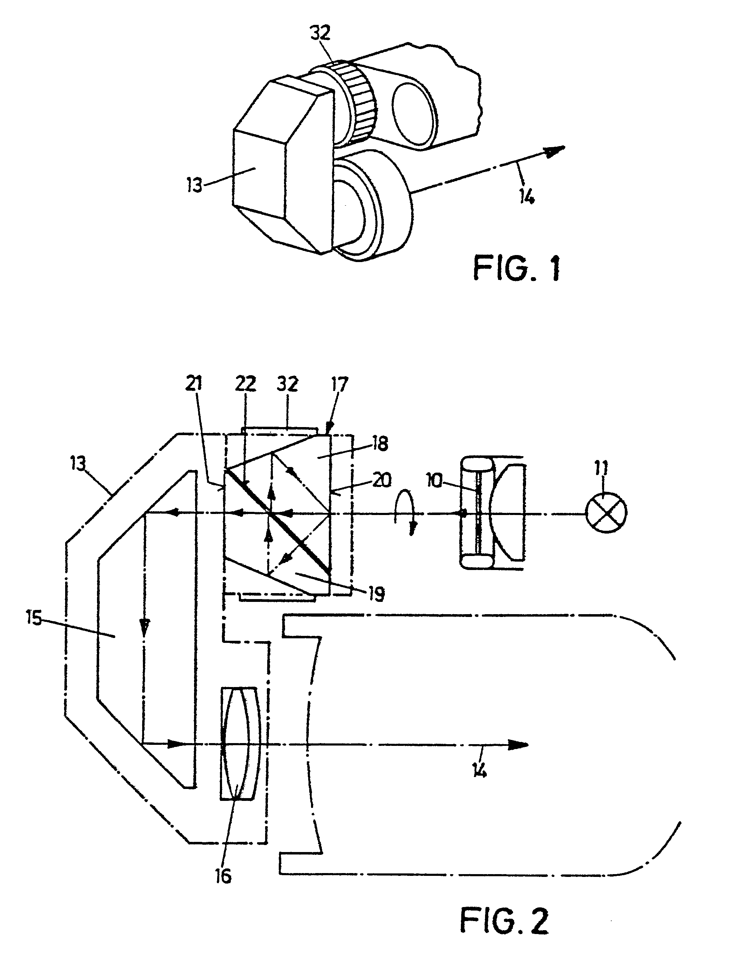

Fig. 1 eine Zusatzvorrichtung mit schwenkbarem Arm zum Einschwenken in einen Strahlengang eines Fernglases und

Fig. 2 Einzelheiten des zugehörigen optischen Systems.

In gewissen Situationen, wie beispielsweise beim Segeln oder Fliegen, ist es sehr schwer oder fast unmöglich, eine Karte im herkömmlichen Sinn zu benutzen. Hier hilft ein Kartenausschnitt, der auf einem Diapositiv oder Filmstreifen 10 enthalten ist, die ihrerseits mit Hilfe einer Beleuchtungseinrichtung 11 von der Rückseite her beleuchtbar sind. Das Diapositiv bzw. der Filmstreifen 10 mit dem Kartenausschnitt enthalten darüber hinaus Winkelangaben, aus denen die jeweiligen zugehörigen Himmelsrichtungen abzulesen sind. Über ein Rändelrad 32 kann der Prismensatz 17 gedreht und damit der Kartenausschnitt für den Betrachter der jeweiligen – ggfs. auch über einen eingespiegelten Kompass erfassten – Blickrichtung angepasst werden.

Da es in vielen Fällen unerwünscht wäre, wenn solche Kartenausschnitte ständig in das Gesichtsfeld des Fernglases eingeblendet wären, erfolgt die Einblendung der auf dem Diapositiv bzw. Filmstreifen 10 enthaltenen Kartenausschnitte über einen in einen Strahlengang des Fernglases schwenkbaren Arm 13, der aus dem Gesichtsfeld herausgeschwenkt werden kann, wenn eine Betrachtung des Kartendiapositivs 10 nicht erwünscht ist. In diesem Zustand kann das Fernglas wie ein normales Glas benutzt werden. Der Arm 13 kann in verschiedenen Positionen rastend (kraftoder formschlüssig) gehalten werden.

Die Umlenkung der Abbildungsstrahlen des Kartendiapositivs bzw. Filmstreifens 10 erfolgt über ein in den schwenkbaren Arm 13 eingebautes Umlenkprisma 15, das im Längsschnitt trapezförmige Gestalt hat. An der Ausgangsseite des schwenkbaren Arms 13, d. h. im Anschluss an das Umlenkprisma 15 ist ein Linsensystem 16 vorgesehen, von dem aus das Diapositiv 10 ins Unendliche abgebildet und in den Strahlengang 14 des Fernglases eingespiegelt wird.

Auch um zu einer möglichst geringen Baulänge zu kommen, und gleichzeitig den Kartenausschnitt optisch zu drehen, wird dem Umlenkprisma 15 ein Prismensatz 17 nach Pechan vorangestellt, der aus zwei Prismen 18 und 19 besteht. Selbstverständlich können auch andere, dem Pechanprisma ähnliche Prismen verwendet werden.

Die vom Diapositiv bzw. Filmstreifen 10 kommenden Abbildungsstrahlen durchsetzen die senkrecht zur optischen Achse verlaufende Eintrittsfläche 20 im wesentlichen senkrecht, werden an einer im wesentlichen um 45° gegenüber der optischen Achse geneigten Trennungslinie 22 zwischen den beiden Prismen 18 und 19 senkrecht zur optischen Achse abgelenkt und nach mehreren Umlenkungen durchsetzen die Abbildungsstrahlen die Trennungslinie 22 dann zwischen den beiden Prismen 18 und 19 im wesentlichen senkrecht. Nach mehreren Umlenkungen innerhalb des zweiten Prismas 19 verlassen die Abbildungsstrahlen den Prismensatz 17 über eine Austrittsfläche 21, die senkrecht zur optischen Achse verläuft und treten von dort aus in das bereits zuvor beschriebene Umlenkprisma 15 ein, an dessen Ausgangsseite ein Linsensystem 16 angeordnet ist.

Durch Drehung des Prismensatzes 17 um die optische Achse wird das in den Strahlengang eingespiegelte Bild des Kartenausschnittes für den Betrachter gedreht.

Wird eine Einblendung des Kartenausschnittes gewünscht, so wird zunächst der schwenkbare Arm 13 in den Strahlengang 14 des Fernglases geschwenkt und in dieser Lage rastend gehalten. Der Betrachter des Fernglases kann ggfs. über die bereits bekannte eingeblendete Skalenscheibe eines eingebauten Kompasses oder mit anderen bekannten Mitteln die jeweilige Blickrichtung feststellen. Mit Hilfe des Rändelrades 32 wird nun der Kartenausschnitt für den Betrachter so verschwenkt, dass er positionsgerecht im Blickfeld des Betrachters erscheint, was anhand der Winkelangaben des Kartenausschnitts überprüfbar ist. Ist das erreicht, so stimmen Blickrichtung und Ausrichtung des Kartenausschnittes überein. Der Benutzer des Fernglases erhält damit eine direkte Zuordnung von Kartenausschnitt und Blickrichtung, was ihm die Orientierung ganz erheblich erleichtert.

Das lästige Aufschlagen von Karten, das insbesondere bei ungünstigen Windverhältnissen häufig problematisch ist, entfällt.

## Patentansprüche

1. Einrichtung zur wahlweisen Beobachtung einer Zusatzinformation und eines Objekts mit einem binokularen Fernglas, dadurch gekennzeichnet, dass diese Einrichtung schwenkbar an dem Fernglas angeordnet ist, aus einem Kartenausschnitt mit Winkelangaben im Randbereich auf einem Diapositivfilm (10) besteht, welcher von der Rückseite her beleuchtbar ist, dass ein mittels Rändelrad (32) drehbarer Bilddrehungsprismensatz (17) vorgesehen ist, und dass in einem schwenkbaren Arm (13) eine Prismenanordnung (15) und ein Kollimatorobjektiv (16) vorgesehen sind, über die der Zusatzstrahlengang in den Strahlengang (14) des Fernglases (9) eingespiegelt wird.

2. Einrichtung nach Anspruch 1, dadurch gekennzeichnet, dass der schwenkbare Arm (13) ein im Längsschnitt trapezförmiges Umlenkprisma (15) enthält, dem sich in Austrittsrichtung ein Linsensystem (16) anschliesst.

3. Einrichtung nach Anspruch 1 oder 2, dadurch gekennzeichnet, dass der drehbare Bilddrehungsprismensatz (17) eingangsseitig des Umlenkprismas (15) getrennt vom schwenkbaren Arm (13) angeordnet ist und dass dessen Ein- und Austrittsflächen (20, 21) senkrecht zur einfallenden optischen Achse (33) verlaufen.

4. Einrichtung nach Anspruch 3, dadurch gekennzeichnet, dass der drehbare Bilddrehungsprismensatz (17) aus zwei Prismen (18, 19) besteht, deren Trennungsfläche (22) einen Luftspalt aufweist und um 45° gegenüber der einfallenden optischen Achse (33) geneigt ist, so dass die den drehbaren Bilddrehungsprismensatz (17) bildenden Prismen (18, 19) die einfallenden Strahlen nach dem Eintritt in das erste Prisma (18) an der um 45° geneigten Trennungsfläche (22) senkrecht zur optischen Achse umlenken und die Strahlen nach weiteren Umlenkungen die Trennungsfläche (22) zum weiteren Prisma (19) senkrecht durchsetzen, dort ebenfalls mehrfach umgelenkt werden und schliesslich die Austrittsfläche (21) des weiteren Prismas (19) senkrecht durchsetzen.

5. Einrichtung nach einem der Ansprüche 1 bis 4, dadurch gekennzeichnet, dass der Diapositivfilm (10) in einer Kassette angeordnet und darin in seiner Längsrichtung bewegbar ist.

## Claims

1. A device for optional observation of additional information and an object through binoculars, characterised in that this device is fitted to the binoculars so that it can be swivelled, and comprises a card sector with angles marked around the edge on a slide (10), which can be illuminated from behind; it is provided with an image rotation prism assembly (17) which can be rotated by means of a knurled wheel (32), and in a swivelling arm (13) it has a prism arrangement (15) and a collimator lens (16), by means of which the additional ray path is reflected in the path of the rays (14) of the binoculars (9).

2. A device as described in claim 1, characterised in that the swivelling arm (13) has a deviating prism (15), trapezoidal in longitudinal section, with an adjoining lens system (16) in the exit direction.

3. A device as described in claims 1 or 2, characterised in that the rotatable image rotation prism assembly (17) is mounted separately from the swivelling arm (13) on the input side of the deviating prism (15), and wherein its entrance and exit surfaces (20, 21) run at right-angles to the incident optical axis (33).

4. A device as described in claim 3, characterised in that the rotatable image rotation prism assembly (17) is comprised of two prisms, with an interface (22) having an air gap and being inclined at 45° to the incident optical axis (33), so that the prisms (18, 19) forming the rotatable image rotation prism assembly (17) deflect the incident rays after entry to the first prism (18) at right-angles to the optical axis at the interface (22) inclined by 45°, and the rays after further deflection pass through the interface (22) at right-angles to the further prism (19), are there likewise deflected several times, and finally pass through the exit surface (21) of the further prism (19) at right-angles.

5. A device as described in any of claims 1 to 4, characterised in that the slide (10) is mounted in a cassette in which it can be moved in the longitudinal direction.

## Revendications

1. Dispositif pour l'observation facultative d'une information supplémentaire et d'un objet par une jumelle binoculaire, caractérisé en ce que ce dispositif, articulé sur la jumelle, comporte un extrait de carte avec des indications d'angles portées dans la zone périphérique, dont le support est une pellicule positive (10) pouvant être éclairée de derrière, par un ensemble de prismes de rotation de l'image (17) pouvant être tourné grâce à une bague moletée (32), et par un bras articulé (13) dans lequel sont disposés des prismes (15) et un collimateur (16) grâce auxquels est introduit un faisceau lumineux supplémentaire dans le faisceau lumineux (14) de la jumelle (9).

2. Dispositif selon la revendication 1, caractérisé en ce que le bras articulé (13) contient un prisme de déviation (15) de section longitudinale trapézoïdale, qui se prolonge, du côté de la sortie, par un dispositif de lentilles (16).

3. Dispositif selon la revendication 1 ou 2, caractérisé en ce que l'ensemble de prismes de rotation de l'image (17) est disposé du côté de l'entrée du prisme de déviation (15), séparément du bras articulé (13), et présente des surfaces d'entrée et de sortie (20, 21) perpendiculaires à l'axe optique incident (33).

4. Dispositif selon la revendication 3, caractérisé en ce que l'ensemble de prismes de rotation de l'image (17) se compose de deux prismes (18, 19) dont les surfaces de séparation (22) sont séparées par un interstice et inclinées de 45° sur l'axe optique incident (33) de sorte que les prismes (18, 19) composant l'ensemble de rotation (17) dévient les rayons pénétrants, après leur entrée dans le premier prisme (18), sur la surface de séparation (22) inclinée de 45° sur l'axe optique, et que les rayons, après d'autres déviations, traversent perpendiculairement la surface de séparation (22) vers l'autre prisme (19) pour y subir des déviations multiples et traverser enfin la surface de sortie (21) du second prisme (19).

5. Dispositif selon l'une des revendications 1 à 4, caractérisé en ce que la pellicule positive (10) est disposée dans une cartouche dans laquelle elle est mobile longitudinalement.

FIG. 1

FIG. 2